Europäisches Patentamt

European Patent Office

Office européen des brevets

(11) Publication number: 0 328 129 B1

# EUROPEAN PATENT SPECIFICATION

(45) Date of publication of patent specification: 17.08.94   (51) Int. Cl.⁵: C09B 61/00

(21) Application number: 89102320.2

(22) Date of filing: 10.02.89

(54) **Yellow-colored solid matter and production thereof.**

(30) Priority: 12.02.88 JP 31496/88

(43) Date of publication of application:
16.08.89 Bulletin 89/33

(45) Publication of the grant of the patent:
17.08.94 Bulletin 94/33

(84) Designated Contracting States:
AT BE CH DE ES FR GB GR IT LI LU NL SE

(56) References cited:

PATENT ABSTRACTS OF JAPAN, vol. 4, no.
173 (C-32)[655], 29th November 1980;& JP-
A-55 111 761 (SHIMADAYA HONTEN K.K.)
28-08-1980

PATENT ABSTRACTS OF JAPAN, vol. 4, no.
173 (C-32)[655], 29th November 1980;& JP-
A-55 111 752 (TOYO INK SEYZO K.K.)
28-08-1980

PATENT ABSTRACTS OF JAPAN, vol. 11, no.
69 (C-407)[2516], 3rd March 1987;& JP-A-61
225 257 (SHISEIDO CO., LTD) 07-10-1986

WPI, FILE SUPPLIER, AN=78-44942A [25], Der-
went Publications, Ltd, London, GB;& JP-

A-53 52 665 (M. MORI) 13-05-1978

WPIL, FILE SUPPLIER, AN=86-018502 [3], Der-
went Publications, Ltd, London, GB;& JP-
A-60 243 007 (KANEBO K.K.) 03-12-1985

(73) Proprietor: Takeda Chemical Industries, Ltd.
1-1, Doshomachi 4-chome
Chuo-ku, OSAKA (JP)

(72) Inventor: Makino, Tadashi
39-1, 12 Mishimaoka 2-chome
Ibaraki Osaka 567 (JP)
Inventor: Yamanaka, Minosuke
6-16, Miyayamacho 4-chome
Toyonaka Osaka 560 (JP)

(74) Representative: von Kreisler, Alek,
Dipl.-Chem. et al
Patentanwälte
von Kreisler-Selting-Werner
Postfach 10 22 41
D-50462 Köln (DE)

**Description**

This invention relates to yellow-colored matter in food, pharmaceutical and other fields using C-type riboflavin butyrate (abbreviated as C-RTB hereinafter) as a colorant or coloring agent.

In the fields of food, pharmaceutical and other industries, there are found a large number of solid-form products. They are generally colored for their improved images as commercial articles or for drug identities.

In providing foods or pharmaceuticals with a yellow color, use in generally made of coal-tar colors (Food Yellow No. 4, Food Yellow No. 4 Aluminum Lake; Japanese Standards of Food Additives, 5th edition), yellow iron oxide [Japanese Standards of Extrapharmacopeial Ingredients (1986 edition)] and, further, riboflavin (Japanese Patent Publication No. 46-26989, Japanese Patent Publication No. 61-3224) or riboflavin butyrate, for instance.

Also available are natural colors such as Powder Sanyellow No. 3 (carotinoid-based; San-ei Chemical) and Powder Sanyellow No. 2 (flavonoid-based; San-ei Chemical; Japanese Patent Publication No. 50-148562).

Among the above-mentioned, riboflavin is used as a yellow colorant or nutrient additive in dairy products or bakery products but, under alkaline conditions, it is relatively unstable against light and tends to fade or discolor.

When riboflavin is used in coloring solid matter such as granular compositions or tablets, the intrinsic bitter taste of riboflavin is felt upon taking and, furthermore, the color of colored matters is rather yellowish orange than lemon yellow.

Riboflavin butyrate has no bitter taste but is liposoluble; therefore, it is used exclusively in oleaginous or fatty foods, such as margarine, cheese and cream.

With this ester, too, it has been difficult to obtain a fresh and bright lemon yellow; colored matters have a yellow-orange color.

The present inventors made intensive investigations in an attempt to color solid matters in food, pharmaceutical and other fields by using riboflavin butyrate, which is said to be most safe, as colorant and, as a result, found that C-RTB is the most effective in coloring solid matters, such as foods and pharmaceutical compositions and capable of providing colored matters having a fresh and bright lemon yellow color without uneven coloration of A-type (abbreviated as A-RTB hereinafter), B-type (abbreviated as B-RTB hereinafter) and C-type riboflavin butyrate (C-RTB). Based on this finding and further investigations, the present invention has now been completed.

Thus, the invention provides (i) a yellow-colored matter colored with C-type riboflavin butyrate wherein the matter to be colored is a component of a pharmaceutical composition in the form of a powder or granules, and (ii) method for coloring a matter to be colored with C-RTB.

C-RTB used in this invention has been already described in "Yakugaku-zasshi, 108(1), 39-43 (1988)"

In that reference, A-RTB, B-RTB and C-RTB have been described yet. It is known that A-RTB, B-RTB and C-RTB are reddish orange, khaki and yellow matter, respectively.

Among these RTBs, C-RTB can be obtained by dispersing a methanol solution of A-RTB in water with hard stir.

In this invention C-RTB is obtained by dispersing an ethanol solution of A-RTB, which is commercial product, in water.

In the case that C-RTB is applied as a colorant or coloring agent in food, pharmaceutical and other fields, a fresh and bright lemon yellow-colored matter can be unexpectedly obtained. It has not been obtained so far.

The term "riboflavin butyrate" as used herein means riboflavin tetrabutyrate, which is listed on the Japanese Standards of Extrapharmacopeial Ingredients (1986 edition) and on the Japanese Standards of Food Additives (5th edition).

In accordance with the invention, this ester is first dissolved in ethanol, the solution obtained is then dispersed in water, and the resulting suspension is used as a coloring liquid or further as a granulation liquid.

In another way of the invention, a powder which is obtained by filtrating the suspension, followed by drying it in a vacuum is used as a colorant or coloring agent.

Any form other than such a suspension or a powder is selected depending a feature of matter to be colored.

The suspension can generally be obtained by adding the ethanol solution of riboflavin butyrate to water and causing dispersion under agitation. Conversely, the dispersion may also be attained by adding water to the ethanol solution with stirring.

The dispersing procedure is carried out generally at room temperature.

2

The concentration of riboflavin butyrate in the ethanol solution is adjusted to 1 to 70% by weight.

The suspension is prepared by using the ethanol solution in an amount of 100 parts by weight or less, preferably 40 parts by weight or less, per 100 parts by weight of water.

A matter to be colored is colored with the suspension prepared in the above manner.

In most cases, the technique comprising adding the suspension to the matter to be colored and then mixing the whole uniformly or the technique comprising spraying the solid matter uniformly with the suspension, for instance, can be employed.

In this production methods, C-RTB is used in an amount of 0.001 to 10%, preferably 0.001 to 5%, by weight based on the solid matter or powdery pharmaceutical composition component to be colored.

Riboflavin butyrate is used in an amount within the above range based on the matter to be colored. The use of the ester in amounts less than 0.001% by weight will result in insufficient coloration and ready fading or discoloration.

In amounts exceeding 10% by weight, the quantity of the suspension, in particular water, becomes excessive and, as a result, troubles may be encountered in and/or a prolonged period of time may be required for the granulation process.

The quantity of the suspension depends on the concentration of the ethanol solution in the step of suspension preparation, the quantity of water in the step of dispersing the ethanol solution in water, the granulation method and other factors, hence cannot be mentioned generally or specifically. Said quantity of suspension should suitably be selected on the case-by-case basis.

When the matter to be colored is in the form of a powder, this powder may be colored while it is granulated.

For such granulation, stirring wet granulators [e.g. Pony Mixer (Inoue Seisakusho)], vertical granulators (e.g. one made by Fuji Sangyo) and fluidized bed granulators [e.g. Glatt (Glatt, West Germany), Flow Coater (Freund Sangyo), Aeromatic (Fuji Sangyo)] can be used, among others.

The suspension according to the invention may also contain one or more binders in common use (e.g. starch paste, hydroxypropylcellulose, hydroxypropylmethylcellulose, methylcellulose, carboxymethylcellulose sodium, PVP, gelatin, pullulan, sucrose) and others.

It is also possible to add a solution of such a binder to the matter to be colored, together with the suspension.

The above-mentioned methods give yellow-colored solid matters. The matter to be colored is used generally in the form of a powder or granules (grain size: 10 $\mu$m to 1 mm).

When a powder is colored simultaneously with granulation, a yellow-colored granulation product is obtained.

Such granulation product may be subjected to appropriate size selection to give granules within a desired grain size range.

In other case that a matter to be colored, such as a shell of capsule, is dissolved in its coloring process and then is fluid, the suspension as a colorant or coloring agent can be also added into the solution of the matter to be colored.

In using a powder of C-RTB, the powder can be directly added into a binding solution for granulation and be mixed with the matter to be colored.

In the case that a matter to be colored is dissolved in its coloring process and then is fluid, the powder can be added into the solution of the matter to be colored.

The quantity of the powder depends on the matter to be colored, and hence cannot be mentioned generally or specifically. Said quantity of the powder should suitably be selected on the case-by-case. For example, the quantity of the powder is 50 weight % or less.

The term "matter to be colored" as used herein means a raw material or primary product (granules, plain or uncoated tablets) used in the field of food or pharmaceutical industry.

Moreover, C-RTB as a colorant or coloring agent is used for a shell of hard or soft capsule.

As particularly preferred examples of such matter to be colored, there may be mentioned powdery pharmaceutical components to serve as matters for the manufacture of solid pharmaceutical preparations.

Typical examples of such matter to be colored are components of pharmaceutical compositions, such as ascorbic acid, sodium ascorbate, calcium ascorbate, vitamin A, vitamin D, thiamine nitrate, pyridoxine hydrochloride, nicotinamide, calcium pantothenate, biotin, vitamin $B_{12}$, acetaminophen, dextromethorphan, aspirin, methylephedrine, aluminum hydroxide and magnesium oxide, sweeteners such as sucrose, sorbitol, mannitol, dextrose and saccharin, flavors such as lemon lime and fruit essences, excipients such as lactose, starch, crystalline cellulose, hydroxypropylcellulose, hydroxypropylmethylcellulose, PVP (polyvinylpyrrolidone) and carboxymethylcellulose calcium, lubricants such as magnesium stearate, stearic acid, talc and light anhydrous silicic acid, and the like powdery matters to be colored as well as granulation products and molding products derived from such powdery matters to be colored.

The yellow-colored solid matters according to the invention may be used, as such, as foods or pharmaceuticals, for example solid preparations such as powders or granules.

However, in particular, in the case of yellow-colored granulation products, yellow tablets can be obtained by tableting said products or mixture of said products and other materials on a conventional tableting machine.

It is also possible to color sugar-coated tablets or film-coated tablets on the occasion of their manufacture by using mixture of C-RTB and sugar coating solution or film coating solution.

The yellow-colored solid matter obtained by the method of the invention are characterized by their having a fresh and bright lemon yellow color without uneven coloration.

When placed on the tongue, they neither taste bitter nor color the tongue.

In carrying out the method of the invention, aqueous solvents, for example ethanol-water solvents generally having an ethanol concentration of 20-30%, are used. Therefore, said method is remarkably advantageous in that said solvents are non-hazardous and that the use of explosion-proof granulators and driers is not necessary.

Tablets, for instance, made up from a colored matter according to the invention and another or other pharmaceutical ingredients are characterized by their being free of uneven coloration and their maintaining the original fresh and bright lemon color.

When the tablets are vitamin-based preparations, the yellow-colored solid matter according to the invention can serve not only as a colorant for but also as an active component of the tablets.

The following examples are further illustrative of this invention.

In the under Examples, Hunterr's equation for demonstrating optical stability of a product is follows (Choichi Suga, "Taikoukou to Shikisai", published by Suga Test Instruments Co., Ltd.);

$$\Delta E = \sqrt{\Delta L^2 + \Delta a^2 + \Delta b^2}$$

$\Delta E$:      Color Difference

$\Delta L$:      Lightness Difference

$\Delta a, \Delta b$:      Hue and Saturation Difference

When a test sample is irrediated for 10 hours by a xenon fade-o-meter, variations of above mentioned factors from that of initial ranges are measured by Color-computer SM-1 (manufactured by Suga Test Instruments Co., Ltd.). The color variation ($\Delta E$) is calcurated from the values of these factors.

In the under Examples, riboflavin butyrate which is a starting material for producing C-RTB is abbreviated as RTB.

Example 1

Yellow-colored granules and tablet

According to the formulas (a) through (c) shown in Table 1, 500 g of powdered sugar containing 30 weight % of ascorbic acid powder was simultaneously granulated and colored to give yellow granules (1mm standard sieve (JIS opening) (16-mesh)pass: 95%).

A fluidized bed granulating machine (FD-3S; non-explosion-proof; manufactured by Fuji Sangyo K.K.) was used. The granulation conditions are indicated in Table 2.

The yellow granules were further mixed with magnesium stearate (0.7 wt. %), a lubricant, and the mixture was molded into tablets by means of a tableting machine (Correct® 19K, manufactured by Kikusui Seisakusho K.K.) to manufacture 3 kinds of flat-face bevel-edge tablets (a) through (c) (wt.: 500 mg/tablet; diameter:10 mm).

The appearance and light stability (color difference:$\Delta E$) of each of the product tablets (a) through (c) are shown in Table 3.

Table 1

| Formula | | Coloring medium (agent) or granulating medium |
|---|---|---|
| This invention | (a) | Granulation is carried out using a suspension prepared by dispersing a solution of 1 g of RTB in 10 ml of ethanol in 100 ml of water. |
| Control | (b) | Granulation is carried out with spraying 100 ml of water over a dry mixture of 1 g of RTB with the substrate. |
| | (c) | Granulation is carried out using a dispersion prepared by force-dispersing 1 g of RTB in 100 ml of water. |

Table 2

| | |
|---|---|
| Feed air temperature | 80 °C |
| Air volume | 0.5 $m^3$/min |
| Liquid feed rate | 10 ml/min |
| Spray air pressure | 1 kg/$cm^2$ |
| Exhaust temperature (granulation) | About 30-40 °C |
| Exhaust temperature (drying) | 60 °C |
| Time | About 20 min. |

Table 3

| Tablet | Appearance | Color difference ($\Delta E$) |
|---|---|---|
| (a) | Bright yellow in lemon series | 4.8 |
| (b) | Yellow orange | 6.9 |
| (c) | Yellow orange, mottled | 5.1 |

According to the manufacturing method of this invention, yellow granules and bright lemon-yellow tablets can be obtained without resort to the use of an explosion-prool granulating machine.

Since the tablet shows a color difference value not over 5, it presents no commercial problem in terms of light fastness.

Example 2

Yellow-colored granules

A vertical granulator (FM-VG-10; manufactured by Fuji Sangyo K.K.) was charged with 1 kg of a powder composed of acetaminophen (40 wt. %), lactose (30 wt. %) and starch (30 wt. %), followed by addition of a suspension of C-RTB [prepared by dissolving 0.1 g of RTB in 10 ml of alcohol, dispersing the solution in 150 ml of water and adding hydroxymethylcellulose (3 wt. %)], whereby the granulation and coloration were carried out simultaneously to give yellow granules.

The granules were dried in a vacuum dryer (manufactured by Kusuki Seisakusho K.K.) and subjected to size selection with a power mill (P-3; manufactured by Showa Chemical Machinery Co., Ltd.) and sieving to give granules with 90% 1mm standard sieve (JIS opening) (16-mesh) pass.

As a control, a mere mixture of 1 kg of the same powder as above with 0.1 g of RTB powder was similarly granulated with 150 ml of water to give control granules.

The appearance and light stability of each of the above two kinds of granules are shown below in the table 4.

EP 0 328 129 B1

Table 4

| Granules | Appearance | Color difference (ΔE) |
|---|---|---|
| This invention | Brilliant yellow in lemon series | 4.1 |
| Control | Yellow orange | 4.0 |

Example 3

Yellow-colored granules and tablet

A fluidized bed granulator (Glatt WSQ-15; manufactured by Ohgawara Seisakusho K.K.) was charged with 10 kg of a powder composed predominantly of ascorbic acid, sodium ascorbate and sorbitol (15 wt.% of ascorbic acid, 15 wt.% of sodium ascorbate and 60 wt.% of sorbitol) and the substrate powder was granulated and colored by spraying with a suspension of C-RTB (prepared by dissolving 20 g of RTB in 150 ml of ethanol and dispersing the solution in 600 ml of water).

The granulation was further continued with spraying a starch paste prepared by dispersing 100 g of starch in 1,900 ml of water and warming it at 80°C.

The resulting yellow granules were dried, subjected to size selection and compression-molded in the same manner as Example 1 to give tablets.

As a control, granules prepared using a mere dispersion of 20 g of RTB in 600 g of the same starch paste was compression-molded to give control tablets. The appearance and light stability of each kind of tablet were shown below in the Table 5.

Table 5

| Tablet | Appearance | Color difference (ΔE) |
|---|---|---|
| This invention | Deep yellow in lemon series | 4.4 |
| Control | Yellow orange, mottled | 4.5 |

Example 4

Yellow-colored granules

A coating pan (30.5 cm (12-inch), manufactured by Kikusui Seisakusho K.K.) was charged with 1 kg of crystalline granulated sugar and spray coating was carried out with 1 kg of a 50:50 mixture (spray composition) of ascorbic acid and powdery sugar while spraying with a suspension prepared by dissolving 0.1 g of RTB in 1 ml of ethanol and dispersing the solution in 500 ml of water.

The coating was continued until a grain diameter of about 5 mm was obtained and the granules were then dried in a vacuum dryer (manufactured by Kusuki Seisakusho K.K.).

As a control, a mixture of 0.1 g of RTB with 1 kg of the same spray composition was sprayed with water to give control granules.

The appearance and light stability of each kind of granule are shown below in the Table 6.

Table 6

| Granule | Appearance | Color difference (ΔE) |
|---|---|---|
| This invention | Bright yellow in lemon series | 4.3 |
| Control | Yellow orange | 4.3 |

6

## Example 5

### Yellow-colored tablet (sugar-coated)

Tablets (diameter 9.5 mmφ, wt. 250 mg, 5,000 tablets) manufactured by compression-molding a powder based on lactose and starch (70 wt.% of lactose and 30 wt.% of starch) were sugar-coated in a coating pan (30.5 cm (12-inch); manufactured by Kikusui Seisakusho K.K.).

The coating composition was prepared by adding a suspension of RTB (prepared by dissolving 0.1 g of RTB in 10 ml of ethanol and dispersing the solution in 50 ml of water) to 1 ℓ of a sugar coating solution composed of granulated sugar, talc, pullulan and water.

A syrup was used as a finish to give sugar-coated tablets with a finish wt. of 450 mg/tablet.

As a control, sugar coating was performed with a mere admixture of 0.1 g of RTB with the sugar coating solution, followed by finishing with the same syrup to give control sugar-coated tablets.

The appearance and light stability of the two kinds of sugar-coated tablets are shown below in the table 7.

Table 7

| Sugar-coated tablet | Appearance | Color difference (ΔE) |
|---|---|---|
| This invention | Bright yellow in lemon series | 4.0 |
| Control | Yellow orange | 4.5 |

## Example 6

### Yellow-colored tablet (film-coated)

Using a film coating composition, the tablets (diameter 9.5 mmφ, wt. 250 mg 40,000 tablets) described in Example 5 were film-coated by means of Accela-coater 24 (manufactured by Manesty).

The film coating composition was prepared by adding a suspension of RTB (prepared by dissolving 0.15 g of RTB in 1 ml of ethanol and dispersing the solution in 10 ml of water) to 3ℓ of a film coating solution composed of hydroxypropylmethylcellulose [TC-5(R); manufactured by Shin-Etsu Chemical Co., Ltd.), titanium oxide, polyethylene glycol 6000 and water.

Finished tablet was 260 mg in weight.

Control film-coated tablets were also prepared using a mere admixture of 0.15 g of RTB with 3ℓ of the same film coating solution as above.

The appearance and light stability of each kind of film-coated tablet are shown in the table 8.

Table 8

| Film-coated tablet | Appearance | Color difference (ΔE) |
|---|---|---|
| This invention | Brilliant yellow in lemon series | 4.1 |
| Control | Yellow orange | 5.2 |

## Example 7

### Yellow-colored tablet (film-coated)

The film coated tablets were prepared as the same composition and method in Example 6, except using a powder of C-RTB in place of the suspension of C-RTB.

The powder of C-RTB were prepared by dissolving 0.3 g of RTB in 3 mℓ of ethanol, dispersing the solution in 30 mℓ of water to give a suspension of C-RTB, filtrating the suspension and drying a filtrate in a vacuum dryer (manufactured by Kusuki Seisakusho K.K.).

The finished tablet was 260 mg in weight.

As a control, film coating tablets were also prepared using a mere admixture of 0.3 g of RTB with 3 ℓ of the same film coating solution as above.

The appearance and light stability of each kind of film-coated tablets are shown in the table 9.

Table 9

| Film-coated tablet | Appearance | Color difference (ΔE) |
|---|---|---|
| This invention | Brilliant yellow in lemon series | 4.1 |
| Control | Yellow orange | 5.2 |

## Example 8

Yellow-colored tablet (sugar-coated)

The sugar coated tablets were prepared as the same composition and manufacturing method in Example 5, except using 1.0 g of powder of C-RTB as the same in Example 7 in place of the suspension of C-RTB.

As a control, sugar coating was performed with a mere admixture of 1.0 g of RTB with 1ℓ of the sugar coating solution as the same in Example 5.

The appearance and light stability of each kind of sugar-coated tablets are shown in the table 10.

Table 10

| Film-coated tablet | Appearance | Color difference (ΔE) |
|---|---|---|
| This invention | Brilliant yellow in lemon series | 4.5 |
| Control | Yellow orange | 5.5 |

## Example 9

Yellow-colored shell of hard-capsule

Gelatin solution were prepared dessolving by heating 30% of gelatin and 60% of water.

On the other hand, a suspension is prepared by dispersing 1 part of titan oxide and 1 part of a yellow powder (containing 1 part of C-RTB substantially), as the same in Example 7, in 10 parts of water using Homomixer (manufactured by Tokushukika Kogyo Co., Ltd.).

The suspension is added into the Gelatin solution, and then, the Gelatin solution is colored.

A capsule-pin is immersed into the colored gelatin solution, and a shell of capsule, is formed. After drying the shell, it is used as hard-capsule.

The obtained shell is colored as fresh and bright lemon yellow.

Reference Example

X-ray Diffraction

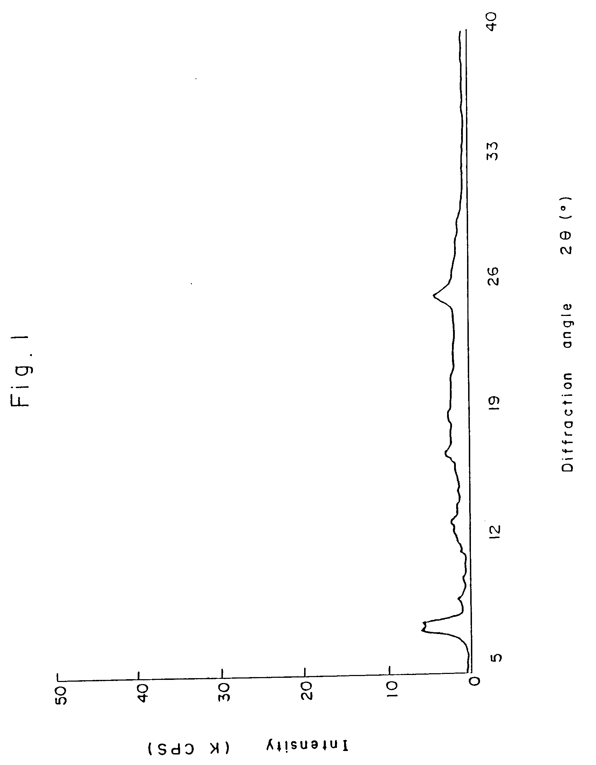

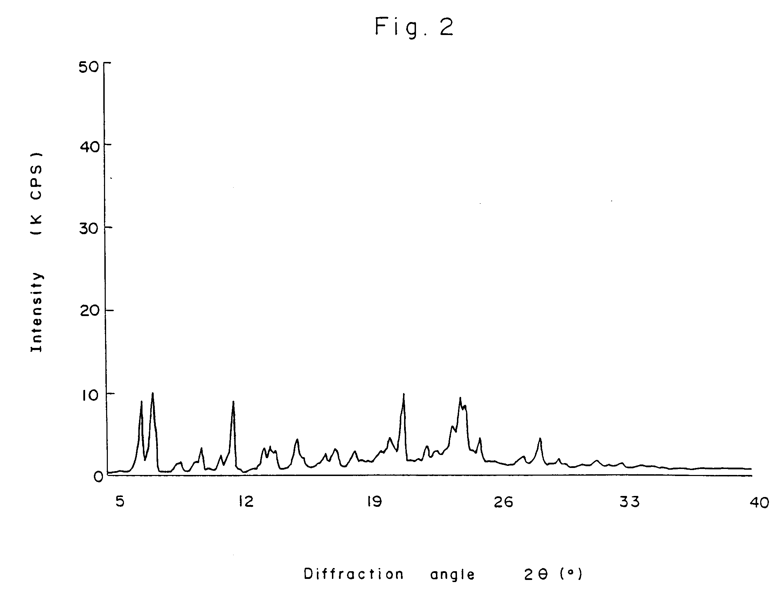

X-ray diffractions of C-RTB and RTB are shown in Figure 1 and Figure 2, respectively.

They were carried out by using X-ray diffractometer (manufactured by Rigaku Co.: 40 mV, 40 mA)

C-RTB is the same yellow-colored powder as that discribed in "Yakugaku-zasshi, 108(1), 39-43 (1988)".

RTB, which is-used as a starting material for preparing C-RTB, is recognized as A-RTB.

EP 0 328 129 B1

**Claims**

**Claims for the following Contracting States : AT, BE, CH, DE, FR, GB, IT, LI, LU, NL, SE**

1. A yellow-colored matter colored with C-type riboflavin butyrate wherein the matter to be colored is a component of a pharmaceutical composition in the form of a powder or granules.

2. A yellow-colored matter colored with C-type riboflavin butyrate wherein the matter to be colored is a tablet.

3. A method for coloring a matter to be colored, which comprises mixing the matter to be colored with C-type riboflavin butyrate.

4. The method as claimed in claim 3 wherein C-type riboflavin butyrate takes the form of a suspension obtained by dispersing an ethanol solution of riboflavin butyrate in water.

5. The method as claimed in claim 4 wherein riboflavin butyrate is used in an amount of 0.001 to 10% by weight based on the matter to be colored.

6. The method as claimed in claim 3 wherein C-type riboflavin butyrate is a powder.

7. The method as claimed in claim 6 wherein the powder of C-type riboflavin butyrate is one obtained by dispersing an ethanol solution of riboflavin butyrate in water to give a suspension, and drying the suspension in a vacuum.

8. The method as claimed in claim 3 wherein the matter to be colored is a component of a pharmaceutical composition in the form of a powder or granules.

9. The method as claimed in claim 3 wherein the matter to be colored is a tablet.

10. The method as claimed in claim 8 wherein a coloring process is carried out while a component of a pharmaceutical composition in the form of a powder or granules is granulated.

**Claims for the following Contracting States : ES, GR**

1. A method for coloring a matter to be colored, which comprises mixing the matter to be colored with C-type riboflavin butyrate wherein the matter to be colored is a component of a pharmaceutical composition in the form of a powder or granules.

2. A method for coloring a matter to be colored, which comprising mixing the matter to be colored with C-type riboflavin butyrate wherein the matter to be colored is a tablet.

3. The method as claimed in claim 1 wherein a coloring process is carried out while a component of a pharmaceutical composition in the form of a powder or granules is granulated.

4. The method as claimed in claim 1 or 2 wherein riboflavin butyrate is used in an amount of 0.001 to 10% by weight based on the matter to be colored.

5. A method for producing a yellow-colored tablet, which comprises tableting a yellow-colored matter which is obtained by mixing a matter to be colored with C-type riboflavin butyrate.

6. The method as claimed in any one of claims 1 to 5 wherein C-type riboflavin butyrate takes the form of a suspension obtained by dispersing an ethanol solution of riboflavin butyrate in water.

7. The method as claimed in any one of claims 1 to 5 wherein C-type riboflavin butyrate is a powder.

8. The method as claimed in claim 7 wherein the powder of C-type riboflavin butyrate is one obtained by dispersing an ethanol solution of riboflavin butyrate in water to give a suspension, and drying the suspension in a vacuum.

9

**Patentansprüche**

**Patentansprüche für folgende Vertragsstaaten : AT, BE, CH, DE, FR, GB, IT, LI, LU, NL, SE**

1. Gelbgefärbte Substanz, die mit Riboflavin-Butyrat des Typs C gefärbt ist, wobei die zu färbende Substanz eine Komponente einer pharmazeutischen Zusammensetzung in Pulver- oder Granulatform ist.

2. Gelbgefärbte Substanz, die mit Riboflavin-Butyrat des Typs C gefärbt ist, wobei die zu färbende Substanz eine Tablette ist.

3. Verfahren zur Färbung einer zu färbenden Substanz, die das Mischen der zu färbenden Substanz mit Riboflavin-Butyrat des Typs C umfaßt.

4. Verfahren gemäß Anspruch 3, wobei Riboflavin-Butyrat des Typs C die Form einer Suspension annimmt, die durch Dispergieren einer Ethanol-Lösung von Riboflavin-Butyrat in Wasser erhalten wird.

5. Verfahren gemäß Anspruch 4, wobei Riboflavin-Butyrat in einer Menge von 0.001 bis 10 Gewichtsprozent, bezogen auf die zu färbende Substanz, verwendet wird.

6. Verfahren gemäß Anspruch 3, wobei das Riboflavin-Butyrat des Typs C ein Pulver ist.

7. Verfahren gemäß Anspruch 6, wobei das Pulver des Riboflavin-Butyrats des Typs C dadurch erhalten wird, daß man eine Ethanol-Lösung von Riboflavin-Butyrat unter Bildung einer Suspension in Wasser dispergiert und die Suspension in einem Vakuum trocknet.

8. Verfahren gemäß Anspruch 3, wobei die zu färbende Substanz eine Komponente einer pharmazeutischen Zusammensetzung in Pulver- oder Granulatform ist.

9. Verfahren gemäß Anspruch 3, wobei die zu färbende Substanz eine Tablette ist.

10. Verfahren gemäß Anspruch 8, wobei ein Färbevorgang durchgeführt wird, während eine Komponente einer pharmazeutischen Zusammensetzung in Pulver- oder Granulatform granuliert wird.

**Patentansprüche für folgende Vertragsstaaten : ES, GR**

1. Verfahren zur Färbung einer zu färbenden Substanz, die das Mischen der zu färbenden Substanz mit Riboflavin-Butyrat des Typs C umfaßt, wobei die zu färbende Substanz eine Komponente einer pharmazeutischen Zusammensetzung in Pulver- oder Granulatform ist.

2. Verfahren zur Färbung einer zu färbenden Substanz, die das Mischen der zu färbenden Substanz mit Riboflavin-Butyrat des Typs C umfaßt, wobei die zu färbende Substanz eine Tablette ist.

3. Verfahren gemäß Anspruch 1, wobei ein Färbevorgang durchgeführt wird, während eine Komponente einer pharmazeutischen Zusammensetzung in Pulver- oder Granulatform granuliert wird.

4. Verfahren gemäß Anspruch 1 oder 2, wobei Riboflavin-Butyrat in einer Menge von 0.001 bis 10 Gewichtsprozent, bezogen auf die zu färbende Substanz, verwendet wird.

5. Verfahren zur Herstellung einer gelbgefärbten Tablette, das das Tablettieren einer gelbgefärbten Substanz umfaßt, die durch Mischen einer zu färbenden Substanz mit Riboflavin-Butyrat des Typs C erhalten wird.

6. Verfahren gemäß einem der Ansprüche 1 bis 5, wobei Riboflavin-Butyrat des Typs C die Form einer Suspension annimmt, die durch Dispergieren einer Ethanol-Lösung von Riboflavin-Butyrat in Wasser erhalten wird.

7. Verfahren gemäß einem der Ansprüche 1 bis 5, wobei das Riboflavin-Butyrat des Typs C ein Pulver ist.

8. Verfahren gemäß Anspruch 7, wobei das Pulver des Riboflavin-Butyrats des Typs C dadurch erhalten wird, daß man eine Ethanol-Lösung von Riboflavin-Butyrat unter Bildung einer Suspension in Wasser dispergiert und die Suspension in einem Vakuum trocknet.

**Revendications**

**Revendications pour les Etats contractants suivants : AT, BE, CH, DE, FR, GB, IT, LI, LU, NL, SE**

1. Matière de couleur jaune, colorée à l'aide de butyrate de riboflavine de type C, la matière à colorer étant un composant d'une composition pharmaceutique en poudre ou en granulés.

2. Matière de couleur jaune, colorée à l'aide de butyrate de riboflavine de type C, la matière à colorer étant un comprimé.

3. Procédé pour colorer une matière à colorer, qui comporte le fait de mélanger la matière à colorer avec du butyrate de riboflavine de type C.

4. Procédé conforme à la revendication 3, dans lequel le butyrate de riboflavine de type C se présente sous la forme d'une suspension que l'on obtient en dispersant, dans de l'eau, une solution de butyrate de riboflavine dans l'éthanol.

5. Procédé conforme à la revendication 4, dans lequel on utilise le butyrate de riboflavine en une quantité représentant de 0,001 à 10 % en poids de la matière à colorer.

6. Procédé conforme à la revendication 3, dans lequel le butyrate de riboflavine de type C est en poudre.

7. Procédé conforme à la revendication 6, dans lequel la poudre de butyrate de riboflavine de type C est une poudre qu'on obtient en dispersant, dans de l'eau, une solution de butyrate de riboflavine dans l'éthanol, ce qui donne une suspension, et en faisant sécher sous vide cette suspension.

8. Procédé conforme à la revendication 3, dans lequel la matière à colorer est un composant d'une composition pharmaceutique en poudre ou en granulés.

9. Procédé conforme à la revendication 3, dans lequel la matière à colorer est un comprimé.

10. Procédé conforme à la revendication 8, dans lequel on réalise l'opération de coloration pendant la granulation d'un composant d'une composition pharmaceutique en poudre ou en granulés.

**Revendications pour les Etats contractants suivants : ES, GR**

1. Procédé pour colorer une matière à colorer, qui comporte le fait de mélanger la matière à colorer avec du butyrate de riboflavine de type C, la matière à colorer étant un composant d'une composition pharmaceutique en poudre ou en granulés.

2. Procédé pour colorer une matière à colorer, qui comporte le fait de mélanger la matière à colorer avec du butyrate de riboflavine de type C, la matière à colorer étant un comprimé.

3. Procédé conforme à la revendication 1, dans lequel on réalise l'opération de coloration pendant la granulation d'un composant d'une composition pharmaceutique en poudre ou en granulés.

4. Procédé conforme à la revendication 1 ou 2, dans lequel on utilise le butyrate de riboflavine en une quantité représentant de 0,001 à 10 % en poids de la matière à colorer.

5. Procédé de production de comprimés de couleur jaune, qui comporte le fait de fabriquer des comprimés d'une matière de couleur jaune qu'on a obtenue en mélangeant une matière à colorer avec du butyrate de riboflavine de type C.

6. Procédé conforme à l'une des revendications 1 à 5, dans lequel le butyrate de riboflavine de type C se présente sous la forme d'une suspension que l'on obtient en dispersant, dans de l'eau, une solution de butyrate de riboflavine dans l'éthanol.

7. Procédé conforme à l'une des revendications 1 à 5, dans lequel le butyrate de riboflavine de type C est en poudre.

8. Procédé conforme à la revendication 7, dans lequel la poudre de butyrate de riboflavine de type C est une poudre qu'on obtient en dispersant, dans de l'eau, une solution de butyrate de riboflavine dans l'éthanol, ce qui donne une suspension, et en faisant sécher sous vide cette suspension.

# Fig. 1

# Fig. 2

Diffraction angle    2θ (°)

EP 0 328 129 B1